(19) Europäisches Patentamt
European Patent Office
Office européen des brevets

(11) EP 0 603 232 B1

(12) # EUROPÄISCHE PATENTSCHRIFT

(45) Veröffentlichungstag und Bekanntmachung des Hinweises auf die Patenterteilung:
**10.04.1996 Patentblatt 1996/15**

(21) Anmeldenummer: **92918593.2**

(22) Anmeldetag: **02.09.1992**

(51) Int Cl.$^6$: **C08F 10/06**, C08F 4/602

(86) Internationale Anmeldenummer:
**PCT/EP92/02017**

(87) Internationale Veröffentlichungsnummer:
**WO 93/05082 (18.03.1993 Gazette 1993/08)**

(54) **VERFAHREN ZUR HERSTELLUNG VON POLYPROPYLEN UNTER HOCHDRUCK**
HIGH-PRESSURE PROCESS FOR PRODUCING POLYPROPYLENE
PROCEDE POUR LA FABRICATION DE POLYPROPYLENE SOUS HAUTE PRESSION

(84) Benannte Vertragsstaaten:
**BE DE ES FR GB NL**

(30) Priorität: **12.09.1991 DE 4130299**

(43) Veröffentlichungstag der Anmeldung:
**29.06.1994 Patentblatt 1994/26**

(73) Patentinhaber: **BASF Aktiengesellschaft**
**D-67063 Ludwigshafen (DE)**

(72) Erfinder:
- **LITTMANN, Dieter**
  **D-6800 Mannheim 1 (DE)**
- **EVERTZ, Kaspar**
  **D-6707 Schifferstadt (DE)**
- **SCHLUND, Rueger**
  **D-6800 Mannheim 1 (DE)**
- **MUEHLENBERND, Thomas**
  **D-6900 Heidelberg (DE)**
- **KONRAD, Rainer**
  **D-6701 Goennheim (DE)**
- **KLIMESCH, Roger**
  **D-6146 Alsbach-Haehnlein (DE)**
- **KERTH, Juergen**
  **D-6719 Carlsberg (DE)**
- **SCHWEIER, Guenther**
  **D-6701 Friedelsheim (DE)**

(56) Entgegenhaltungen:
**EP-A- 0 321 853**
**EP-A- 0 416 566**
**WO-A-91/04257**
**DE-A- 3 150 270**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 603 232 B1

## Beschreibung

Die vorliegende Erfindung betrifft ein Verfahren zur Herstellung von Homopolymerisaten des Propylens oder Copolymerisaten des Propylens mit anderen Olefinen, wobei diese Comonomeren in Mengen von 0,1 bis 99,9 Gew.-%, bezogen auf die Menge an Propylen, eingesetzt werden, oder deren Mischungen.

Verfahren zur Herstellung von Homo- und/oder Copolymerisaten des Propylens bei niederen Drücken und unter Verwendung von Ziegler-Katalysatorsystemen sind z.B. aus der EP-A 351 392 und der EP-A 321 852 bekannt. Hierbei liegen jedoch heterogene Systeme vor, die Produktivitäten sind nicht zufriedenstellend und die Auswahl an Comonomeren ist eingeschränkt.

Aus der WO 91/04257 sind spezielle Metallocenkatalysatorsysteme und Verfahren zu ihrer Herstellung sowie ihre Verwendung zur Herstellung von Olefinpolymerisaten bekannt. Die Herstellung von Homo- oder Copolymerisaten des Propylens unter Hochdruckbedingungen wird jedoch nicht beschrieben.

Die EP-A 416 566 und die EP-A 321 853 beschreiben Verfahren zur Herstellung von Polypropylenwachsen unter Niederdruckbedingungen.

Aus der DE-A 31 50 270 ist ein Verfahren zur Herstellung von Homo- oder Copolymerisaten des Ethylens unter Hochdruckbedingungen bekannt.

Aufgabe der vorliegenden Erfindung war es daher, ein Verfahren zur Herstellung von Homo- und/oder Copolymerisaten des Propylens zur Verfügung zu stellen, welches die genannten Nachteile nicht aufweist.

Demgemäß wurde ein Verfahren von Homopolymerisaten des Propylens oder Copolymerisaten des Propylens mit anderen Olefinen, wobei diese Comonomeren in Mengen von 0,1 bis 99,9 Gew.-%, bezogen auf die Menge an Propylen, eingesetzt werden, oder deren Mischungen gefunden, wobei man bei Drükken von 500 bis 3000 bar und bei Temperaturen von 100 bis 330°C polymerisiert und als Katalysator ein Metallocenkatalysatorsystem verwendet.

Nach diesen Verfahren erhält man lineare Homopolymerisate des Propylens bzw. lineare Copolymerisate, die Kurzkettenverzweigungen aufweisen.

Als Olefine, die mit Propylen copolymerisiert werden können, haben sich cyclische Olefine mit 3 bis 12 C-Atomen, bevorzugt mit 4 bis 8 C-Atomen, Diene, insbesondere $\alpha$, $\omega$-Diene mit 4 bis 10 C-Atomen wie Hexadien-1,5 und Olefine mit 2 bis 10 C-Atomen, bevorzugt Ethylen, Butene und Hexene als geeignet erwiesen, wobei die $\alpha$-Olefine besonders bevorzugt sind. Diese Olefine können auch Aryl- oder Heteroelementsubstituenten wie Styrol oder ungesättigte substituierte Silane aufweisen.

Diese Comonomeren werden in Mengen von 0,1 bis 99,9 Gew.-%, bevorzugt in Mengen von 1 bis 99 Gew.-%, bezogen auf die Menge an Propylen eingesetzt.

Als Katalysatoren werden Metallocenkatalysatorsysteme verwendet, die als aktiven Bestandteil u.a. eine Komplexverbindung von Metallen der IV. und V. Nebengruppe des Periodensystems, insbesondere von Titan, Zirkonium, Hafnium, Vanadium, Niob oder Tantal enthalten. Vorzugsweise werden dabei solche Komplexverbindungen verwendet, bei denen das Metallatom über $\pi$-Bindungen mit ungesättigten cyclischen Kohlenwasserstoffatomen verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem $C_1$- bis $C_{10}$-Alkyl, beispielsweise einer Methyl-, Ethyl-, Propyl- oder Butylgruppe, verknüpft sein kann. Besonders geeignete Komplexverbindungen enthalten dabei insbesondere Chlor.

Bevorzugte Metallocenkatalysatorsysteme enthalten als aktive Bestandteile

a) einen Metallocenkomplex der allgemeinen Formel I

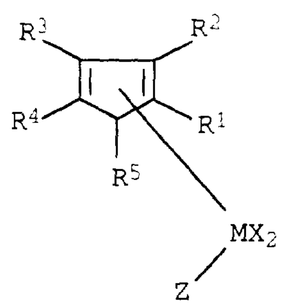

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^6$, |
| wobei $R^6$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 |

C-Atomen im Alkylrest und 6 bis 20 C-Atomen im Arylrest bedeutet,

$R^1$ bis $R^5$ Wasserstoff, $C_1$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl, wobei gegebenenfalls auch zwei benachbarte Reste gemeinsam für ungesättigte, 4 bis 15 C-Atome aufweisende cyclische Gruppen stehen können, oder $Si(R^7)_3$ mit

$R^7$ $C_1$- bis $C_{10}$-Alkyl, $C_6$- bis $C_{15}$-Aryl oder $C_3$- bis $C_{10}$-Cycloalkyl,

Z für X oder

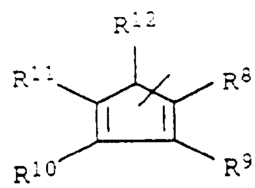

steht,

wobei die Reste $R^8$ bis $R^{12}$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit

$R^{13}$ $C_1$- bis $C_{10}$-Alkyl, $C_6$- bis $C_{15}$-Aryl oder $C_3$- bis $C_{10}$-Cycloalkyl,

oder wobei die Reste $R^4$ und Z gemeinsam eine Gruppierung $-[Y(R^{14})_2]_n-E-$ bilden, in der

Y für Silicium, Germanium, Zinn oder Kohlenstoff steht,

$R^{14}$ für $C_1$- bis $C_{10}$-Alkyl, $C_3$- bis $C_{10}$-Cycloalkyl oder $C_6$- bis $C_{10}$-Aryl

n für die Zahlen 1, 2, 3 oder 4

E für

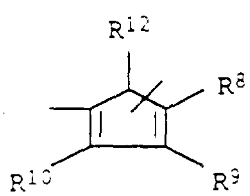

oder A steht, wobei A

-O-, -S-, $>NR^{15}$ oder $>PR^{15}$ bedeutet,

mit $R^{15}$ $C_1$- bis $C_{10}$-Alkyl, $C_6$- bis $C_{15}$-Aryl, $C_3$- bis $C_{10}$-Cycloalkyl, Alkylaryl oder $Si(R^{16})_3$

mit $R^{16}$ $C_1$- bis $C_{10}$-Alkyl, $C_6$- bis $C_{15}$-Aryl, $C_3$- bis $C_{10}$-Cycloalkyl oder Alkylaryl

sowie

b) eine offenkettige oder cyclische Alumoxanverbindung der allgemeinen Formel II oder III

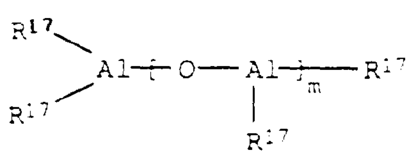

II

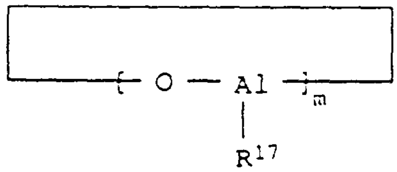

III

wobei $R^{17}$ eine $C_1$- bis $C_4$-Alkylgruppe bedeutet und m für eine ganze Zahl von 5 bis 30 steht.

Von den Metallocenkomplexen der allgemeinen Formel I sind

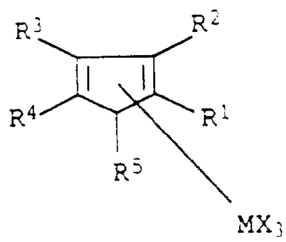

Ia,

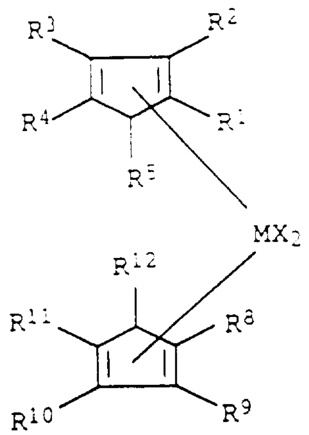

Ib,

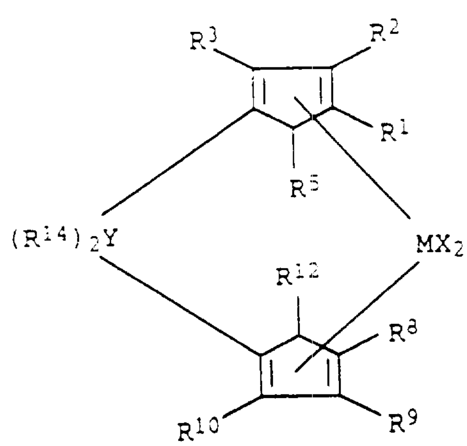

Ic

und

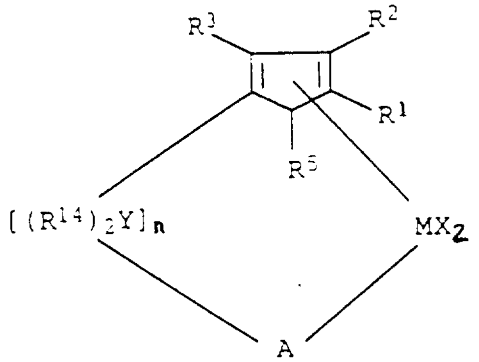

Id

bevorzugt.

Von den Verbindungen der Formel Ia sind insbesondere diejenigen bevorzugt, in denen

| | |
|---|---|
| M | Titan, Zirkonium oder Hafnium, |
| X | Chlor und |
| $R^1$ bis $R^5$ | Wasserstoff oder $C_1$- bis $C_4$-Alkyl bedeuten. |

Von den Verbindungen der Formel Ib sind als bevorzugt diejenigen zu nennen, bei denen

| | |
|---|---|
| M | für Zirkonium oder Hafnium steht, |
| X | für Chlor, |
| $R^1$ bis $R^5$ | Wasserstoff, $C_1$- bis $C_4$-Alkyl oder $Si(R^7)_3$, |
| $R^6$ bis $R^{10}$ | Wasserstoff, $C_1$- bis $C_4$-Alkyl oder $Si(R^{13})_3$ bedeuten. |

Insbesondere sind die Verbindungen der Formel Ib geeignet, in denen die Cyclopentadienylreste gleich sind, bevorzugt sind die unsubstituierten Cyclopentadienylreste.

Von denen Verbindungen der Formel Ic sind diejenigen besonders geeignet, in denen

| | |
|---|---|
| $R^1$ und $R^8$ | gleich sind und für Wasserstoff oder $C_1$- bis $C_{10}$-Alkylgruppen stehen, |
| $R^5$ und $R^{12}$ | gleich sind und für Wasserstoff, eine Methyl-, Ethyl-, iso-Propyl- oder tert.-Butylgruppe stehen |
| $R^2$, $R^3$, $R^9$ und $R^{10}$ | die Bedeutung<br>$R^3$ und $R^{10}$ $C_1$- bis $C_4$-Alkyl<br>$R^2$ und $R^9$ Wasserstoff<br>haben oder zwei benachbarte Reste $R^2$ und $R^3$ sowie $R^9$ und $R^{10}$ gemeinsam für ungesättigte, 4 bis 12 C-Atome aufweisende cyclische Gruppen stehen, |
| $R^{14}$ | für $C_1$- bis $C_8$-Alkyl, |
| M | für Zirkonium oder Hafnium, |
| Y | für Silicium, Germanium, Zinn oder Kohlenstoff und |
| X | für Chlor stehen. |

Beispiele für besonders geeignete Komplexverbindungen sind u.a.

Dimethylsilandiylbis(-3-tert.butyl-5-methylcyclopentadienyl)-zirkoniumdichlorid,
Diethylsilandiylbis(-3-tert.butyl-5-methylcyclopentadienyl)-zirkoniumdichlorid,
Methylethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methylindenyl)-zirkoniumdichlorid,
Diethylsilandiylbis(-2-methylindenyl)-zirkoniumdichlorid,
Dimethylsilandiylbis(-2-ethylindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsulfidbis(-2-methylindenyl)-zirkoniumdichlorid,
Dimethylsilandiylbis(-2-methyl-5-methylcyclopentadienyl)-zirkoniumdichlorid,

Dimethylsilandiylbis(-2-methyl-5-ethylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Bei den Verbindungen der allgemeinen Formel Id sind als besonders geeignet diejenigen zu nennen, in denen

M für Zirkonium oder Hafnium,
X fur Chlor oder $C_1$- bis $C_{10}$-Alkyl stehen,
Y für Silicium oder Kohlenstoff steht, wenn n = 1 ist oder für Kohlenstoff, wenn n = 2 ist
$R^{14}$ für $C_1$- bis $C_8$-Alkyl, $C_5$- und $C_6$-Cycloalkyl oder $C_6$- bis $C_{10}$-Aryl,
A für -O-, -S-, $>NR^{15}$

und

$R^1$ bis $R^3$ und $R^5$ für Wasserstoff, $C_1$- bis $C_{10}$-Alkyl, $C_3$- bis $C_{10}$-Cycloalkyl, $C_6$- bis $C_{15}$-Aryl oder $Si(R^7)_3$ stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metellocenkomplexe können auch in kationischer Form vorliegen, wie in der EP-A 277 003 und der EP-A 277 004 beschrieben wird.

Neben der Komplexverbindung enthalten die Metallocenkatalysatorsysteme in der Regel noch oligomere Alumoxanverbindungen der allgemeinen Formel II oder III, wobei $R^{17}$ bevorzugt für Methyl- oder Ethylgruppen und m bevorzugt für eine Zahl von 10 bis 25 steht.

Die Herstellung dieser oligomeren Alumoxanverbindungen erfolgt üblicherweise durch Umseczung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Bei dem erfindungsgemäßen Verfahren hat es sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1 liegt.

Für das erfindungsgemäße Verfahren werden die Katalysatoren i.a. in einer Menge von $10^{-1}$ bis $10^{-9}$, bevorzugt von $10^{-2}$ bis $10^{-5}$ mol/l Metall eingesetzt.

Das Verfahren kann in den üblichen für die Hochdruckpolymerisation verwendeten Reaktoren durchgeführt werden, beispielsweise in Rührautoklaven.

Es hat sich als vorteilhaft erwiesen, vor der Polymerisation zunächst die Komplexverbindung von Metallen der IV. und V. Nebengruppe des Periodensystems mit der oligomeren Alumoxanverbindung zu vermischen, wodurch sich ein aktiviertes Katalysatorsystem bildet. Die Dauer dieses Aktivierungsschrittes beträgt üblicherweise 1 bis 120 Minuten, vorzugsweise 10 bis 100 Minuten. Die Vermischung wird bevorzugt in der Weise durchgeführt, daß man die Komplexverbindung mit einer Lösung der oligomeren Alumoxanverbindung in einem inerten Lösungsmittel, beispielsweise in Benzol, Toluol, Hexan, Heptan oder deren Mischungen, bei Temperaturen von 0 bis 50°C in Kontakt bringt.

Das erfindungsgemäße Verfahren kann so durchgeführt werden, daß die Lösungen aus Komplexverbindungen und oligomeren Alumoxanverbindungen vor dem Reaktor gemischt und/oder in den Reaktor an mehreren Stellen eingespeist werden. Die Polymerisation kann absatzweise oder kontinuierlich durchgeführt werden. Man arbeitet bei Drücken von 500 bis 3500 bar, bevorzugt von 500 bis 3000 bar, insbesondere von 1000 bis 3000 bar und bei Temperaturen von 100 bis 330°C, bevorzugt von 120 bis 300°C, insbesondere von 120 bis 250°C. Die Verweilzeiten liegen im Bereich von 20 bis 240, bevorzugt von 30 bis 120 Sekunden.

Die wesentlichen Vorteile des erfindungsgemäßen Verfahrens bestehen darin, daß hohe Produktivitäten erzielt werden, daß die Auswahl an Comonomeren sehr groß ist, daß hohe Umsätze bei kurzen Verweilzeiten und hohe Molekulargewichte erreicht werden.

Beispiele

Beispiele 1

Herstellung eines Propylen-Homopolymerisats (PP)

440 mg (≙ 1 mmol)

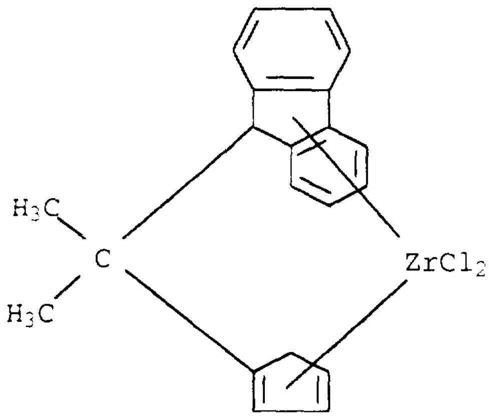

Ic'

wurden in einer Mischung aus 50 ml (36 g, 0,5 mol) Aluminiumtrimethyl und 290 g 1,53 molarer toluolischer Methylaluminoxan-Lösung (0,5 mol) in 10 l Toluol gelöst. Unter Luft- und Feuchtigkeitsausschluß wurde in einem kontinuierlich arbeitenden Hochdruck-Rührautoklav 10 $m^3$ Propylen/h und die oben beschriebene Lösung dosiert.

Über die Versuchsbedinungen und die Ergebnisse gibt Tabelle 1 Aufschluß.

Das mittlere Molekulargewicht $\bar{M}_w$ (Gewichtsmittelwert) wurde durch Gelpermeationschromatographie bestimmt.

Tabelle 1:

| Temperatur [°C] | Druck [bar] | g Ic'/h | Verweilzeit [min] | Produktivität [g PP/g Ic'·h] | $\bar{M}_w$ |
|---|---|---|---|---|---|
| 149 | 1510 | 0,17 | 1,5 | 8380 | 2000 |

Beispiel 2

Herstellung eines Propylen-Ethylen-Copolymerisats

Es wurde wie in dem Beispiel 1 gearbeitet, jedoch wurde eine Mischung aus Propylen und Ethylen polymerisiert. Die Versuchsbedingungen und die Ergebnisse sind in der Tabelle 2 zusammengestellt.

Tabelle 2:

| Temperatur [°C] | Druck [bar] | g Ic'/h | Gew.-% Propylen zu Gew.-% Ethylen im Gasgemisch*) | Produktivität [g Polymer/ g Ic'·h] | $\bar{M}_w$ |
|---|---|---|---|---|---|
| 190 | 1508 | 0,078 | 77/23 | 24 358 | 10.000 |

*) ≙ 30 Gew.-% Ethylen, bezogen auf die Menge an Propylen

**Patentansprüche**

**1.** Verfahren zur Herstellung von Homopolymerisaten des Propylens oder Copolymerisaten des Propylens mit anderen

Olefinen, wobei diese Comonomeren in Mengen von 0,1 bis 99,9 Gew.-%, bezogen auf die Menge an Propylen, eingesetzt werden, oder deren Mischungen, dadurch gekennzeichnet, daß man bei Drücken von 500 bis 3000 bar und bei Temperaturen von 100 bis 330°C polymerisiert und als Katalysator ein Metallocenkatalysatorsystem verwendet.

**2.** Verfahren nach Anspruch 1, dadurch gekennzeichnet, daß man ein Metallocenkatalysatorsystem verwendet, das als aktive Bestandteile

a) einen Metallocenkomplex der allgemeinen Formel I

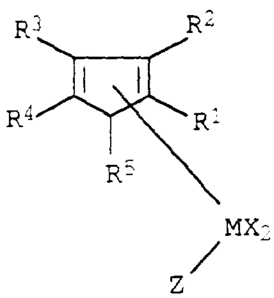

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^6$, |
| wobei $R^6$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^5$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit |
| $R^7$ | $C_1$- bis $C_{10}$-Alkyl, $C_6$- bis $C_{15}$-Aryl oder $C_3$- bis $C_{10}$-cycloalkyl, |

Z für X oder

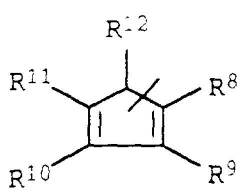

steht,

| | |
|---|---|
| wobei die Reste $R^8$ bis $R^{12}$ | Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit |
| $R^{13}$ | $C_1$- bis $C_{10}$-Alkyl, $C_6$- bis $C_{15}$-Aryl oder $C_3$- bis $C_{10}$-Cycloalkyl, |
| oder wobei die Reste $R^4$ und Z | gemeinsam eine Gruppierung $-[Y(R^{14})_2]_n-E-$ bilden, in der |
| Y | für Silicium, Germanium, Zinn oder Kohlenstoff steht, |
| $R^{14}$ | für $C_1$- bis $C_{10}$-Alkyl, $C_3$- bis $C_{10}$-Cycloalkyl oder $C_6$- bis $C_{15}$-Aryl |
| n | für die Zahlen 1, 2, 3 oder 4 |

E für

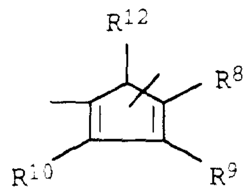

oder A steht, wobei A
-O-, -S-, $>NR^{15}$ oder $>PR^{15}$ bedeutet,

mit $R^{15}$ $C_1$- bis $C_{10}$-Alkyl, $C_6$- bis $C_{15}$-Aryl, $C_3$- bis $C_{10}$-Cycloalkyl, Alkylaryl oder $Si(R^{16})_3$
mit $R^{16}$ $C_1$- bis $C_{10}$-Alkyl, $C_6$- bis $C_{15}$-Aryl, $C_3$- bis $C_{10}$-Cycloalkyl oder Alkylaryl

sowie

b) eine offenkettige oder cyclische Alumoxanverbindung der allgemeinen Formel II oder III

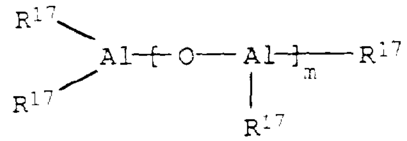

II

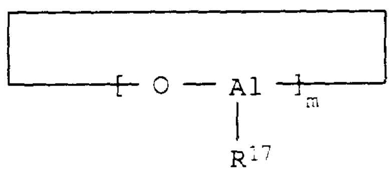

III

wobei $R^{17}$ eine $C_1$- bis $C_4$-Alkylgruppe bedeutet und m für eine ganze Zahl von 5 bis 30 steht,

enthält.

**Claims**

1. A process for the preparation of a homopolymer of propylene or of a copolymer of propylene with other olefins, these comonomers being used in amounts of from 0.1 to 99.9% by weight, based on the amount of propylene, or mixtures thereof, wherein polymerization is carried out at from 500 to 3,000 bar and at from 100 to 330°C and the catalyst used is a metallocene catalyst system.

2. A process as claimed in claim 1, wherein a metallocene catalyst system is used which contains, as active components,

a) a metallocene complex of the formula I

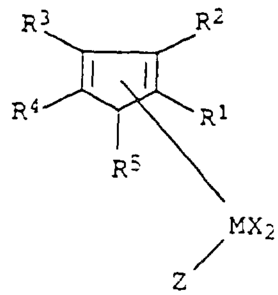

I

where

M is titanium, zirconium, hafnium, vanadium, niobium or tantalum,
X is fluorine, chlorine, bromine, iodine, hydrogen, $C_1$-$C_{10}$-alkyl, $C_6$-$C_{15}$-aryl or $-OR^6$,
$R^6$ is $C_1$-$C_{10}$-alkyl, $C_6$-$C_{15}$-aryl, alkylaryl, arylalkyl, fluoroalkyl or fluoroaryl, each having from 1 to 10 carbon atoms in the alkyl radical and 6 to 20 carbon atoms in the aryl radical,
$R^1$ to $R^5$ are each hydrogen, $C_1$-$C_{10}$-alkyl, 5-membered to 7-membered cycloalkyl which in turn may carry a $C_1$-$C_{10}$-alkyl radical as a substituent, $C_6$-$C_{15}$-aryl or arylalkyl, where two adjacent radicals together may furthermore form cyclic groups of 4 to 15 carbon atoms, or $Si(R^7)_3$,
$R^7$ is $C_1$-$C_{10}$-alkyl, $C_6$-$C_{15}$-aryl or $C_3$-$C_{10}$-cycloalkyl,
Z is X or

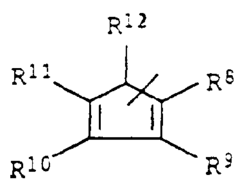

$R^8$ to $R^{12}$ are each hydrogen, $C_1$-$C_{10}$-alkyl, 5-membered to 7-membered cycloalkyl which in turn may carry a $C_1$-$C_{10}$-alkyl radical as a substituent, $C_6$-$C_{15}$-aryl or arylalkyl, and two adjacent radicals together may furthermore form cyclic groups of 4 to 15 carbon atoms, or $Si(R^{13})_3$,
$R^{13}$ is $C_1$-$C_{10}$-alkyl, $C_6$-$C_{15}$-aryl or $C_3$-$C_{10}$-cycloalkyl, or $R^4$ and Z together form a group $-[Y(R^{14})_2]_n$-E-,
Y is silicon, germanium, tin or carbon,
$R^{14}$ is $C_1$-$C_{10}$-alkyl, $C_3$-$C_{10}$-cycloalkyl or $C_6$-$C_{15}$-cycloalkyl,
n is 1, 2, 3 or 4,
E is

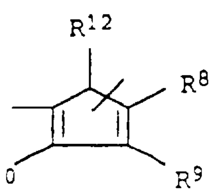

or A,
A is -O-, -S-, $>NR^{15}$ or $>PR^{15}$,
$R^{15}$ is $C_1$-$C_{10}$-alkyl, $C_6$-$C_{15}$-aryl, $C_3$-$C_{10}$-cycloalkyl, alkylaryl or $Si(R^{16})_3$ and
$R^{16}$ is $C_1$-$C_{10}$-alkyl, $C_6$-$C_{15}$-aryl, $C_3$-$C_{10}$-cycloalkyl or alkylaryl,
and

b) an open-chain or cyclic alumoxane compound of the formula II or III

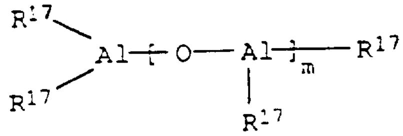

II

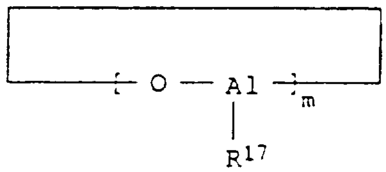

III

where $R^{17}$ is $C_1$-$C_4$-alkyl and m is an integer of from 5 to 30.

## Revendications

**1.** Procédé de préparation d'homopolymères du propylène ou de copolymères du propylène avec d'autres oléfines, ces comonomères étant mis en réaction dans des proportions de 0,1 à 99,9% en poids par rapport à la quantité de propylène, ou de leurs mélanges, caractérisé en ce que l'on polymérise sous des pressions de 500 à 3000 bar et à des températures de 100 à 330°C et en ce que l'on utilise, comme catalyseur, un système catalytique à base de métallocène.

**2.** Procédé selon la revendication 1, caractérisé en ce que l'on utilise un système catalytique à base de métallocene qui contient, comme constituants actifs,

a) un complexe métallocène de formule générale I

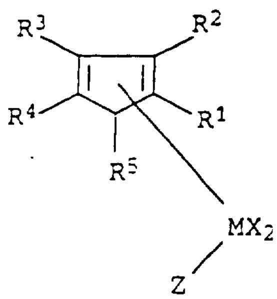

I

dans laquelle les substituants ont les significations suivantes:

| | |
|---|---|
| M | atome de titane, de zirconium, de hafnium, de vanadium, de niobium ou de tantale, |
| X | atom de fluor, de chlore, de brome, d'iode, d'hydrogène, groupement alkyle en $C_1$-$C_{10}$, aryle en $C_6$-$C_{15}$ ou $-OR^6$,<br>$R^6$ représentant un groupement alkyle en $C_1$-$C_{10}$, aryle en $C_6$-$C_{15}$, alkylaryle, arylalkyle, fluoroalkyle ou fluoroaryle contenant chacun 1 à 10 atomes de carbone dans le reste alkyle et 6 à 20 atomes de carbone dans le reste aryle, |
| $R^1$ à $R^5$ | atomes d'hydrogène, groupements alkyle en $C_1$-$C_{10}$, cycloalkyle à 5-7 chaînons qui peuvent porter de leur côté un reste alkyle en $C_1$-$C_{10}$ en tant que substituant, aryle en $C_6$-$C_{15}$ ou arylalkyle, deux restes voisins pouvant aussi être éventuellement mis ensemble pour des groupements cycliques comportant 4 à 15 atomes de carbone, ou $Si(R^7)_3$,<br>$R^7$ représentant un groupement alkyle en $C_1$-$C_{10}$, aryle en $C_6$-$C_{15}$ ou cycloalkyle en $C_3$-$C_{10}$, |
| Z | est mis pour X ou pour un groupement |

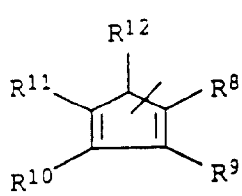

les restes $R^8$ à $R^{12}$ représentant des atomes d'hydrogène, des groupements alkyle en $C_1$-$C_{10}$, cycloalkyle à 5-7 chaînons qui peuvent porter de leur côté un reste alkyle en $C_1$-$C_{10}$ en tant que substituant, aryle en $C_6$-$C_{15}$ ou arylalkyle, deux restes voisins pouvant aussi être éventuellement mis ensemble pour des groupements cycliques comportant 4 à 15 atomes de carbone, ou $Si(R^{13})_3$, $R^{13}$ étant un groupement alkyle en $C_1$-$C_{10}$, aryle en $C_6$-$C_{15}$ ou cycloalkyle en $C_3$-$C_{10}$,

ou les restes $R^4$ et Z formant ensemble un groupement $-[Y(R^{14})_2]_n$-E-, dans lequel

Y est mis pour un atome de silicium, de germanium, d'étain ou de carbone,
$R^{14}$ est mis pour un groupement alkyle en $C_1$-$C_{10}$, cycloalkyle en $C_3$-$C_{10}$ ou aryle en $C_6$-$C_{15}$,
n est mis pour les nombres 1, 2, 3 ou 4,
E est mis pour

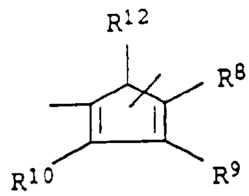

ou pour A, A représentant
-O-, -S-, $>NR^{15}$ ou $>PR^{15}$
avec $R^{15}$ = groupement alkyle en $C_1$-$C_{10}$, aryle en $C_6$-$C_{15}$, cycloalkyle en $C_3$-$C_{10}$, arylalkyle ou $Si(R^{16})_3$ où
$R^{16}$ est un groupement alkyle en $C_1$-$C_{10}$, aryle en $C_6$-$C_{15}$, cycloalkyle en $C_3$-$C_{10}$ ou alkylaryle,

ainsi que

b) un composé alumoxanne en chaîne ouverte ou cyclique de formule générale II ou III

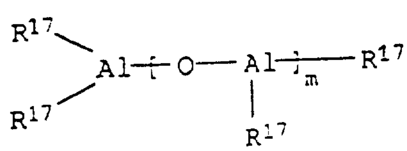

II

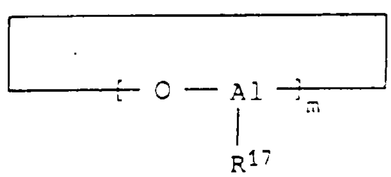

III

dans laquelle $R^{17}$ représente un groupement alkyle en $C_1$-$C_4$ et m est mis pour un nombre entier de 5 à 30.